(19) Europäisches Patentamt / European Patent Office / Office européen des brevets

(11) **EP 1 746 749 A2**

(12) **EUROPEAN PATENT APPLICATION**

(43) Date of publication:
**24.01.2007 Bulletin 2007/04**

(51) Int Cl.:
*H04H 1/00* (2006.01)

(21) Application number: **06015179.2**

(22) Date of filing: **20.07.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **20.07.2005 KR 20050065815**

(71) Applicant: **Samsung Electronics Co., Ltd.**
**Suwon-si**
**Gyeonggi-do (KR)**

(72) Inventor: **Lee, Kyung-Hee**
**Yeongtong-gu**
**Suwon-si**
**Gyeonggi-do (KR)**

(74) Representative: **Grünecker, Kinkeldey,**
**Stockmair & Schwanhäusser**
**Anwaltssozietät**
**Maximilianstrasse 58**
**80538 München (DE)**

(54) **System for reducing the work load of a terminal for receiving Digital Multimedia Broadcast (DMB) and method of transmitting version information relating to Program Specific Information and Service Information (PSI/SI) data and of parsing PSI/SI data**

(57)   Provided are a DMB system for reducing a working load of a DMB receiving terminal, a method of transmitting PSI/SI version information, and a method of parsing PSI/SI. When PSI/SI is generated, a DMB station receives version information of the PSI/SI from each of PSI/SI generators, generates PSI/SI version information, and transmits the generated PSI/SI version information through a specific channel. Then, the DMB receiving terminal receives the PSI/SI version information, compares the received PSI/SI version information to stored PSI/SI version information, and parses received PSI/SI according to the comparison result. Accordingly, by controlling the DMB receiving terminal to parse PSI/SI only if the PSI/SI has been modified, an unnecessary working load due to the parsing can be reduced.

FIG.3

**Description**

The present invention relates generally to a digital multimedia broadcasting (DMB) system, and in particular, to an apparatus and method for receiving program specific information (PSI)/service information (SI) from a DMB station.

Commonly, a Motion Picture Experts Group-2 (MPEG-2) transport stream (TS) is used as a transmission standard of satellite digital multimedia broadcasting (S-DMB). In general, according to the S-DMB standard, an S-DMB channel is composed of a pilot channel for transmitting configuration information of a code division multiplex (CDM) channel including Walsh code information, a conditional access system (CAS) channel for transmitting authentication information required for receiving a DMB program, an electronic program guide (EPG) channel for transmitting information on service channels, and first as well as second media channels for transmitting an actual stream ( transport stream (TS)) packet data.

A DMB station transmits program specific information (PSI) and service information (SI) to DMB receiving terminals using the EPG channel, and a DMB receiving terminal can receive DMB data according to a channel selected by a user by referring to PSI and SI. PSI is information used for the DMB receiving terminal to demultiplex and decode a specific stream from a multiplexed stream, and SI is guide information of services and individual programs provided to the user in addition to PSI. Examples of PSI are a program association table (PAT), a program map table (PMT), and a conditional access table (CAT), and examples of SI are a service description table (SDT), a network information table (NIT), an event information table (EIT), a time offset table (TOT), and a broadcaster information table (BIT). Hereinafter, PSI and SI are called PSI/SI.

The SDT contains broadcasting service channels currently being broadcasted and information on the broadcasting channels, for which a user can select a desired channel by referring to the SDT. The PAT contains identifications (IDs) of the broadcasting channels currently being broadcasted and packet IDs (PIDs) of the PMT having additional information of the broadcasting channels, i.e., PMT PIDs which are PIDs of the broadcasting channels. The PMT contains PIDs of video and audio stream packets corresponding to PIDs of individual broadcasting channels, i.e., the PMT PIDs. The NIT contains information on transmission networks of S-DMB. The EIT contains information on names, beginning times, and broadcasting durations of individual programs. The BIT contains information on broadcasting stations broadcasting the individual programs. The TOT contains information such as a current time and date.

The configuration information of the CDM channel is transmitted through the pilot channel. Authentication information, such as an entitlement management message (EMM), and PSI/SI, such as the CAT, the PAT, and the NIT, are transmitted through the CAS channel. PSI/SI, such as the SDT, the EIP, the TOT, and the BIT, is transmitted through the EPG channel. Stream data (such as packetized elementary stream (PES)) for DMB, broadcasting access permission information per channel, such as Entitlement Control Message (ECM), and the PMT are transmitted through the first and second media channels (hereinafter, a media channel).

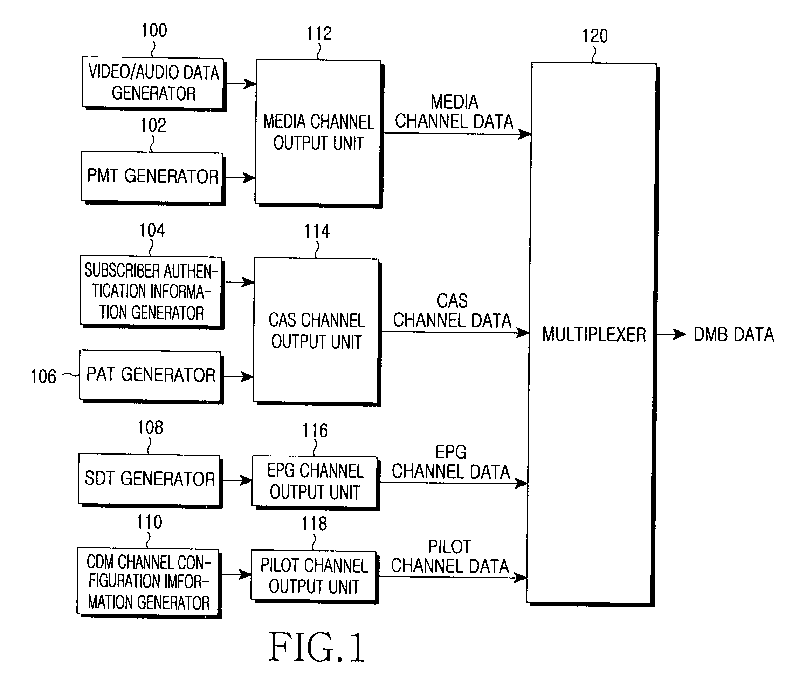

FIG. 1 is a block diagram of a conventional DMB station transmitting PSI/SI through relevant channels in a conventional DMB system. Herein, although PSI/SI contains the plurality of tables described above, it is assumed that only the SDT, the PAT, and the PMT for respective channels are used.

Referring to FIG. 1, the conventional DMB station includes a video/audio data generator 100 for generating video/audio data (hereinafter, multimedia data), a PMT generator 102 for generating the PMT, a media channel output unit 112, for receiving the multimedia data and the PMT and outputting the received multimedia data and PMT through a media channel, a subscriber authentication information generator 104 for generating the EMM for each subscriber, a PAT generator 106 for generating the PAT, a CAS channel output unit 114 for receiving the EMM and the PAT and outputting the received EMM and PAT through a CAS channel, an SDT generator 108 for generating the SDT, an EPG channel output unit 116 for receiving the SDT and outputting the received SDT through an EPG channel, a CDM channel configuration information generator 110 for CDM channel configuration information, a pilot channel output unit 118 for receiving the CDM channel configuration information and outputting the received CDM channel configuration information through a pilot channel, and a multiplexer 120 for multiplexing data input from the media channel output unit 112, the CAS channel output unit 114, the EPG channel output unit 116, and the pilot channel output unit 118 into DMB data.

When the PSI/SI is received, a DMB receiving terminal (not shown) extracts additional information regarding a DMB program currently being viewed by parsing the received PSI/SI. Although the PSI/SI does not actually influence the DMB program, the PSI/SI contains important additional information regarding the DMB program as described above. Thus, the PSI/SI is requisite information to confirm information regarding a DMB program currently being viewed, and in particular, since information, such as the SDT, the PAT, and the PMT, among the PSI/SI contains information required for a user to select a channel of DMB, the information, such as the SDT, the PAT, and the PMT, is requisite information.

When the PSI/SI is modified, the DMB receiving terminal can determine that PSI/SI has been modified using version information of the PSI/SI. In general, the version information of the PSI/SI is transmitted by being included in the PSI/SI. For example, when the SDT is modified, information on a version of the modified SDT is transmitted by being included in the modified SDT. SDT data containing the SDT version information is multiplexed into a plurality of TS packet data by the multiplexer 120 and transmitted to the DMB receiving terminal. Thus, the DMB receiving terminal can determine whether the SDT is modified only if the DMB receiving terminal receives the multiplexed TS packet data of the SDT data and parses the SDT data.

Thus, a conventional DMB receiving terminal must parse the PSI/SI to determine whether the PSI/SI is modified every time the PSI/SI is received even if the PSI/SI has been modified or not. However, the PSI/SI corresponds to information not frequently modified. Regardless of this, since the conventional DMB receiving terminal cannot determine whether the PSI/SI is modified without parsing the PSI/SI, the conventional DMB receiving terminal must parse the PSI/SI even if the PSI/SI has not been modified, thereby causing an unnecessary working load due to the unnecessary parsing.

The present invention is to substantially solve at least the above problems and/or disadvantages and to provide at least the advantages set forth below. It is the object of the present invention to provide an apparatus and method for reducing an unnecessary working load due to unnecessary parsing by controlling a digital multimedia broadcasting (DMB) receiving terminal to parse PSI/SI only if the PSI/SI has been modified.

This object is solved by the subject matter of the independent claims.

Preferred embodiments are defined in the dependent claims.

According to one aspect of the present invention, there is provided a digital multimedia broadcasting (DMB) system including: a DMB station for, when PSI/SI is generated, receiving version information of the PSI/SI from each of PSI/SI generators generating the PSI/SI, generating PSI/SI version information, and transmitting the generated PSI/SI version information through one of pre-set channels; and a DMB receiving terminal for receiving the PSI/SI version information, comparing the received PSI/SI version information to stored PSI/SI version information, and parsing received PSI/SI according to the comparison result.

According to another aspect of the present invention, there is provided a method of transmitting PSI/SI version information in a digital multimedia broadcasting (DMB) station, the method includes: generating PSI/SI version information containing all of version information of PSI/SI generated by each of PSI/SI generators; inserting the generated PSI/SI version information into one of transmission channels; and transmitting the PSI/SI version information through the one transmission channels.

According to another aspect of the present invention, there is provided a method of parsing PSI/SI in a digital multimedia broadcasting (DMB) receiving terminal, the method includes: receiving PSI/SI version information; checking whether stored PSI/SI version information exists; if the stored PSI/SI version information exists, determining whether PSI/SI has changed by comparing the received PSI/SI version information to the stored PSI/SI version information; and if PSI/SI has been modified as the determination result, parsing received PSI/SI.

The present invention will become more apparent from the following detailed description when taken in conjunction with the accompanying drawing in which:

FIG. 1 is a block diagram schematically illustrating a conventional DMB station transmitting PSI/SI through relevant channels in a conventional DMB system;
FIG. 2 illustrates a configuration of a conventional data frame transmitted through a pilot channel;
FIG. 3 is a block diagram schematically illustrating a DMB station transmitting PSI/SI version information through a pilot channel according to the present invention;
FIG. 4 is a block diagram schematically illustrating a DMB receiving terminal according to the present invention;
FIG. 5 is a detailed block diagram schematically illustrating a DMB data receiving unit included in the DMB receiving terminal of FIG. 4, according to the present invention; and
FIG. 6 is a flowchart illustrating a method of parsing PSI/SI according to PSI/SI version information received through a pilot channel by a DMB receiving terminal according to the present invention.

Preferred embodiments of the present invention will be described herein below with reference to the accompanying drawings. In the drawings, the same or similar elements are denoted by the same reference numerals even though they are depicted in different drawings. In the following description, well-known functions or constructions are not described in detail since they would obscure the invention in unnecessary detail.

The cardinal principles will now be first described to fully understand the present invention. In the present invention, when PSI/SI generators generate PSI/SI, a DMB station transmits version information of versions of the generated PSI/SI through a specific channel.

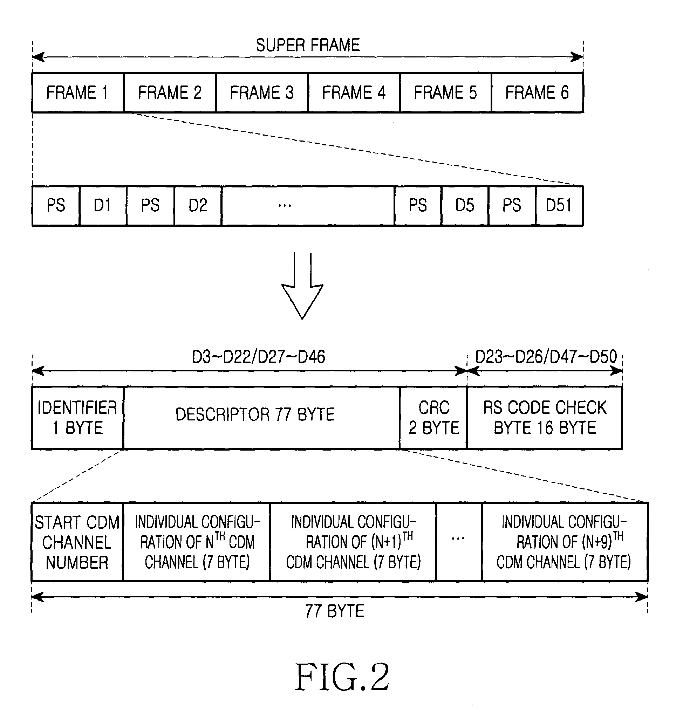

For example, a pilot channel carries configuration information of a CDM channel of S-DMB, and in general, for DMB used in a country, such as the Republic of Korea, there is sufficient remaining space to transmit the PSI/SI version information as illustrated in FIG. 2 described below.

FIG. 2 illustrates a configuration of a conventional data frame transmitted through a pilot channel. Referring to FIG. 2, in general, the pilot channel is used to analyze a received signal, detect sync of a diffusion signal, control a receiver, and transmit configuration information of the CDM channel. A super frame of one period includes 6 frames transmitted every $12.75\mu s$.

Each frame includes pilot symbols (PSs) and packetized data, and a payload containing the configuration information of the CDM channel corresponding to D3 through D22 and D27 through D46 of the packetized data. According to the configuration of the payload, a single frame includes a start CDM channel number and individual configuration information of 10 CDM channels.

In addition, in general, the total number of Walsh codes, which are orthogonal diffusion codes used to identify channels, is 64, i.e., 0th Walsh code to 63rd Walsh code. For example the Republic of Korea uses only 32 Walsh codes out of the 64 Walsh codes while Japan uses the other 32 Walsh codes. Thus, where for example, only 32 channels are utilized, a spare space of maximum 2 frames, i.e., 144 bytes, among the 6 frames exists.

The amount actually required for the PSI/SI version information will now be calculated. If it is assumed that 8 bits are needed to present an ID per table, i.e., Table_ID, and 5 bits are needed to present version information of each of table, the amount required for the PSI/SI version information is calculated by Equation (1) as expressed below, and a data structure of the PSI/SI version information is shown in Table 1.

$$[8(Table\_ID) + 5(Version)] \times 7(number \quad of \quad tables \quad except \quad PMT) +$$
$$[8(PMTTable\_ID) + (5(Version) \times n(number \quad of \quad channels))] \qquad (1)$$

**Table 1**

| Version IDs and version information of PSI/SI except PMT | | | | | | | PMT version information of n channels | | | |
|---|---|---|---|---|---|---|---|---|---|---|
| 8 bits | 5 bits | 8 bits | 5 bits | ... | 8 bits | 5 bits | 8 bits | 5 bits | ... | 5 bits |
| SDT ID | SDT version | PAT ID | PAT version | ... | BIT ID | BIT version | PMT ID | 1st ch.... PMT version | | nth ch. PMT version |

Herein, Table_ID is used to present information on a unique ID of each of the tables. The version information is version information of each of the tables. The tables are the SDT, the PAT, the PMT, the CAT, the NIT, the EIT, the TOT, and the BIT described above. The PMT contains version information of each of DMB broadcasting channels. That is, for example, if 100 channels are provided, the amount of the PMT version information is 508 bits, i.e., 64 bytes. The amount of the version information of tables except the PMT is 91 bits, i.e., 12 bytes. Thus, the amount of PSI/SI version information according to the present invention can be inserted into a descriptor of a single frame even if the number of DMB broadcasting channels is 100. Accordingly, according to the present invention, the PSI/SI version information can be transmitted through a data frame of the pilot channel.

In the present invention, a DMB receiving terminal (not shown) receives the PSI/SI version information, compares the received PSI/SI version information to stored PSI/SI version information, and parses received PSI/SI according to the comparison result. A DMB system according tithe present invention includes a DMB station for transmitting the PSI/SI through the pilot channel and a DMB receiving terminal for receiving the PSI/SI version information through the pilot channel and determining whether PSI/SI has been modified.

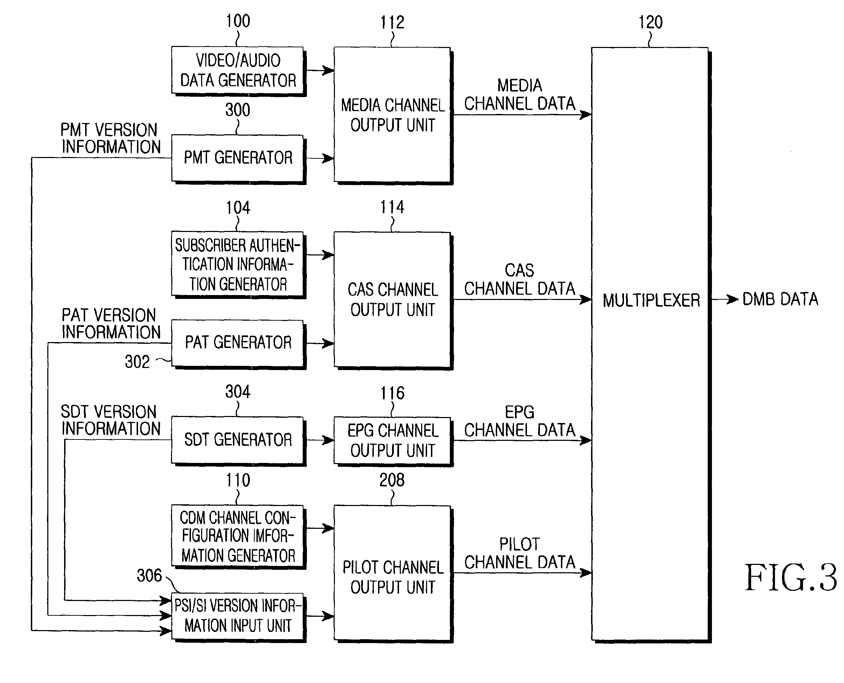

FIG. 3 is a block diagram of the DMB station according to the present invention. Similar to FIG. 1, it is assumed that only the SDT, the PAT, and the PMT of the PSI/SI are used in FIG. 3.

Referring to FIG. 3, besides the configuration of the conventional DMB station illustrated in FIG. 1, the DMB station according to the present invention includes a PSI/SI version information input unit 306 for receiving information on versions of generated PSI/SI and outputting the received PSI/SI version information to a pilot channel output unit 208.

When a PMT is generated, a PMT generator 300 of the DMB station according to the present invention outputs the generated PMT to the media channel output unit 112 and outputs version information of the generated PMT to the PSI/SI version information input unit 306. When a PAT is generated, a PAT generator 302 of the DMB station according to the present invention outputs the generated PAT to the CAS channel output unit 114 and outputs version information of the generated PAT to the PSI/SI version information input unit 306. When an SDT is generated, an SDT generator 304 of the DMB station according to the present invention outputs the generated SDT to the EPG channel output unit 116 and outputs version information of the generated SDT to the PSI/SI version information input unit 306.

The PSI/SI version information input unit 306 generates the PSI/SI version information illustrated in Table 1 from version information of the PSI/SI input from the PMT generator 300, the PAT generator 302, and the SDT generator 304 and outputs the generated PSI/SI version information to the pilot channel output unit 208. When the generated PSI/SI version information is input from the PSI/SI version information input unit 306, the pilot channel output unit 208 selects one of currently unused frames of the pilot channel and inserts the PSI/SI version information into the selected frame of the pilot channel. Then, pilot channel data containing the PSI/SI version information is input to the multiplexer 120 and multiplexed into DMB data.

Thus, the DMB station according to the present invention transmits data containing the PSI/SI version information through the pilot channel. Accordingly, a DMB receiving terminal according to the present invention can receive the PSI/SI version information through the pilot channel and determines whether the received PSI/SI version information is the same as stored PSI/SI version information by comparing the received PSI/SI version information to the stored PSI/SI version information. The DMB receiving terminal parses PSI/SI only if the received PSI/SI version information is different from the stored PSI/SI version information, i.e., if the received PSI/SI version information has been modified.

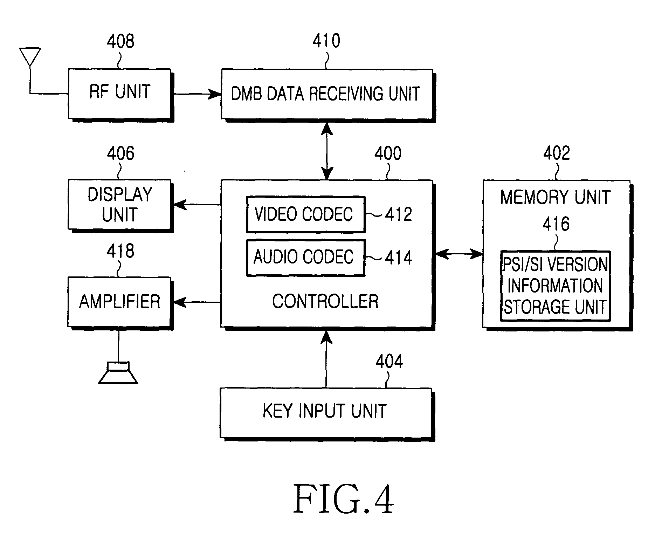

FIG. 4 is a block diagram schematically illustrating a DMB receiving terminal according to the present invention. Referring to FIG. 4, the DMB receiving terminal according to the present invention includes a memory unit 402, a key input unit 404, a display unit 406, and a DMB data receiving unit 410, which are connected to a controller 400. The controller 400 controls every component of the DMB receiving terminal. When demultiplexed video data or demultiplexed audio data is received from the DMB data receiving unit 410, the controller 400 decodes the demultiplexed video data and demultiplexed audio data using a video codec 412 and an audio codec 414. When PSI/SI version information is received from the DMB data receiving unit 410, the controller 400 checks whether stored PSI/SI version information exists. If stored PSI/SI version information does not exist, the controller 400 parses received PSI/SI. If stored PSI/SI version information exists, the controller 400 compares the received PSI/SI version information to the stored PSI/SI version information and parses the received PSI/SI according to the comparison result. The controller 400 receives a key input signal corresponding to a key selected by a user from the key input unit 404 and controls DMB channels according to the key input signal so that a video signal or an audio signal of a DMB channel corresponding to the key input signal is provided.

The memory unit 402 connected to the controller 400 includes a read only memory (ROM), a flash memory, and a random access memory (RAM). The ROM stores programs and various kinds of reference data for processing and controls of the controller 400. The RAM provides a working memory of the controller 400, and the flash memory provides a space for storing various kinds of updatable storage data. In addition, the memory unit 402 of the DMB receiving terminal has an area in which PSI/SI version information of currently parsed PSI/SI is stored. Hereinafter, the area of the memory unit 402 in which the PSI/SI version information of currently parsed PSI/SI is stored is called a PSI/SI version information storage unit 416.

The key input unit 404 includes various kinds of keys containing numeric keys as described above and provides a key input signal corresponding to a key selected by the user to the controller 400. A radio frequency (RF) unit 408 transmits and receives an RF signal to and from a satellite or a gap-filler. The RF unit 408 converts the received RF signal to an intermediate frequency (IF) signal and outputs the converted IF signal to the DMB data receiving unit 410.

The DMB data receiving unit 410 converts the analog IF signal input from the RF unit 408 to a baseband digital signal and classifies received DMB data according to channels based on set Walsh codes. The DMB data receiving unit 410 extracts data containing PSI/SI and PSI/SI version information from the DMB data classified according to the channels, and the controller 400 controls the DMB data receiving unit 410 to compare the received PSI/SI version information to the stored PSI/SI version information. The DMB data receiving unit 410 also receives a PES containing video and audio data of a channel selected by the user, demultiplexes the received PES, and outputs the demultiplexed PES to the controller 400. An amplifier 418 connected to the controller 400 amplifies an audible signal output to a speaker, and the controller 400 controls the amplifier to adjust the volume of the speaker and a gain of a microphone (not shown). The display unit 406 provides the video signal input from the controller 400 to the user as image information.

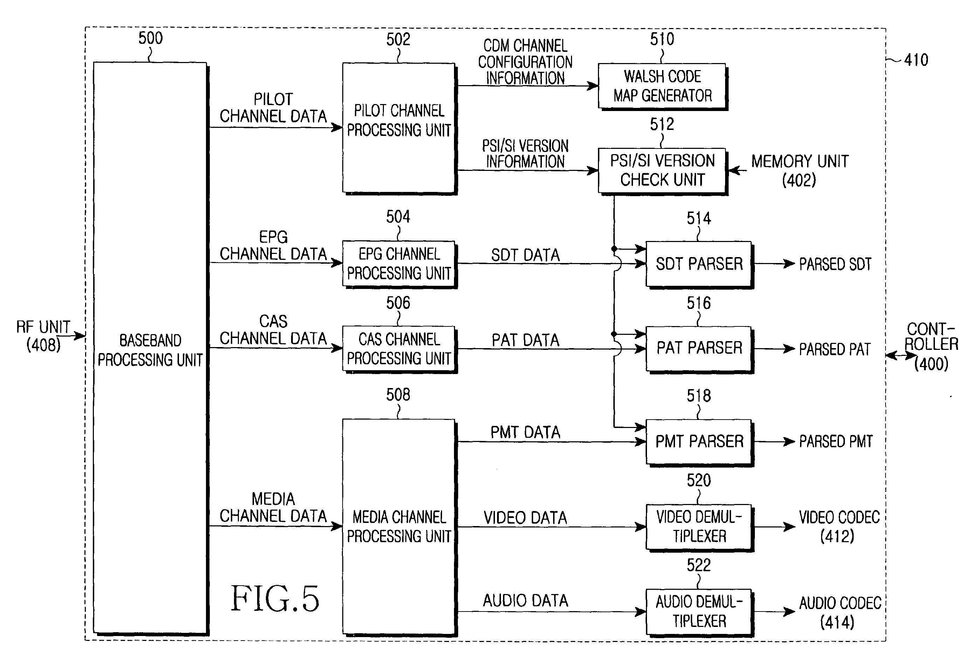

FIG. 5 is a detailed block diagram schematically illustrating the DMB data receiving unit 410 included in the DMB receiving terminal of FIG. 4, according to the present invention. Similar to FIG. 1, it is assumed that only the SDT, the PAT, and the PMT of the PSI/SI are used in FIG. 5. Referring to FIG. 5, the DMB data receiving unit 410 includes a baseband processing unit 500, a pilot channel processing unit 502, an EPG channel processing unit 504, a CAS channel processing unit 506, and a media channel processing unit 508.

The baseband processing unit 500 converts an analog IF signal input from the RF unit 408 to a baseband digital signal. The baseband processing unit 500 also classifies received DMB data into pilot channel data having the frame format of FIG. 2, EPG channel data, CAS channel data, and media channel data according to set Walsh codes and outputs the classified pilot channel data, EPG channel data, CAS channel data, and media channel data to the pilot channel processing unit 502, the EPG channel processing unit 504, the CAS channel processing unit 506, and the media channel processing unit 508, respectively.

The pilot channel processing unit 502 extracts CDM channel configuration information and PSI/SI version information from the pilot channel data input from the baseband processing unit 500 and outputs the PSI/SI version information to a PSI/SI version check unit 512 and the CDM channel configuration information to a Walsh code map generator 510.

The Walsh code map generator 510 generates a Walsh code map required for the user to set a media channel.

When the PSI/SI version information is received, the controller 400 controls the PSI/SI version check unit 512 to reads PSI/SI version information stored in the PSI/SI version information storage unit 416. The PSI/SI version check unit 512 checks whether the received PSI/SI version information is the same as the stored PSI/SI version information by comparing the received PSI/SI version information to the read PSI/SI version information and outputs a parsing signal according to the check result. If the parsing signal is output from the PSI/SI version check unit 512, the controller 400 deletes the stored PSI/SI version information and stores the received PSI/SI version information in the PSI/SI version information storage unit 416.

The EPG channel processing unit 504 generates EPG data by receiving the EPG channel data from the baseband processing unit 500 and outputs an SDT belonging to PSI/SI among the generated EPG data to an SDT parser 514. Then, the SDT parser 514 checks whether the parsing signal is input from the PSI/SI version check unit 512. If the parsing signal is input, the SDT parser 514 parses the input SDT and outputs the parsed SDT

The CAS channel processing unit 506 generates authentication information of the user for a specific broadcasting channel and a PAT belonging to PSI/SI transmitted through the CAS channel by receiving the CAS channel data from the baseband processing unit 500 and outputs the authentication information to the media channel processing unit 508 and the PAT to a PAT parser 516. Then, the PAT parser 516 checks whether the parsing signal is input from the PSI/SI version check unit 512. If the parsing signal is input, the PAT parser 516 parses the input PAT and outputs the parsed PAT.

The media channel processing unit 508 extracts packet data of video and audio data according to a channel selected by the user and a PMT belonging to PSI/SI transmitted through the media channel from the media channel data input from the baseband processing unit 500 and outputs the packet data of video and audio data to a video demultiplexer 520 and an audio demultiplexer 522 and outputs the PMT to a PMT parser 518.

The video demultiplexer 520 and the audio demultiplexer 522 demultiplex the received packet data and output the demultiplexed video and audio data to the controller 400, and the controller 400 outputs the demultiplexed video and audio data to the video codec 412 and the audio codec 414 and controls the video codec 412 and the audio codec 414 to output an image signal and an audible signal according to the channel selected by the user.

When the PMT is input, the PMT parser 518 checks whether the parsing signal is input from the PSI/SI version check unit 512. If the parsing signal is input, the PMT parser 518 parses the input PMT and outputs the parsed PMT. As described above, since the DMB receiving terminal according to the present invention determines whether PSI/SI version information has been modified by comparing a bitstream of newly received PSI/SI version information to a bitstream of stored PSI/SI version information without parsing PSI/SI, if the PSI/SI version information has not been modified, the PSI/SI is not parsed. Accordingly, in the present invention, a working load of the DMB receiving terminal can be reduced not by unnecessarily parsing PSI/SI.

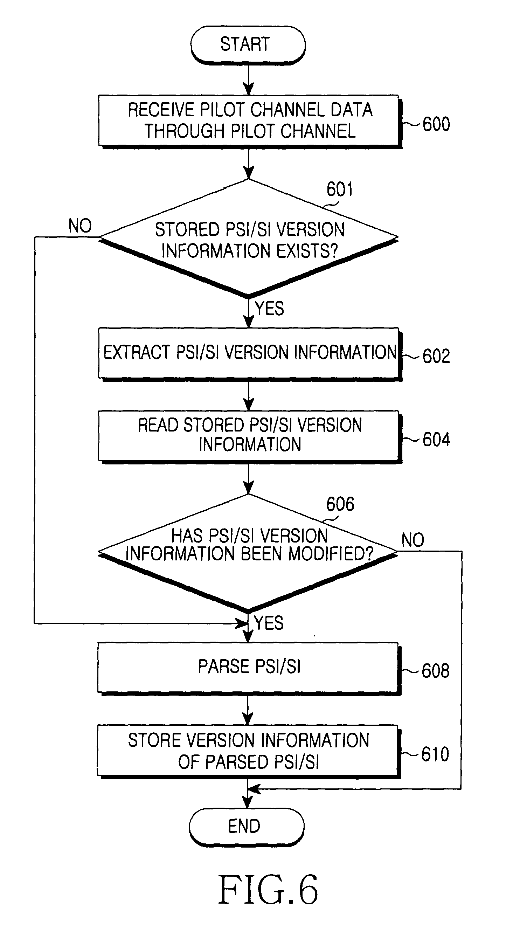

FIG. 6 is a flowchart illustrating a method of parsing PSI/SI according to PSI/SI version information received through the pilot channel by the DMB receiving terminal according to the present invention. Referring to FIG. 6, in step 600, the controller 400 of the DMB receiving terminal according to the present invention receives pilot channel data containing PSI/SI version information through the pilot channel.

In step 601, the controller 400 checks whether stored PSI/SI version information exists. If stored PSI/SI version information does not exist, in step 608, the controller 400 parses received PSI/SI. If stored PSI/SI version information exists, in step 602, the controller 400 extracts the PSI/SI version information from the pilot channel data. When the PSI/SI version information is extracted, in step 604, the controller 400 reads the stored PSI/SI version information.

In step 606, the controller 400 checks whether a bitstream of the extracted PSI/SI version information is the same as a bitstream of the read PSI/SI version information. If the extracted PSI/SI version information is different from the read PSI/SI version information, the controller 400 determines that the PSI/SI version information has been modified. If the controller 400 determines that the PSI/SI version information has been modified as the check result of step 606, in step 608, the controller 400 controls the PSI/SI version check unit 512 to output a parsing signal. Accordingly, in step 608, PSI/SI received through each channel is parsed. In step 610, the controller 400 stores the extracted PSI/SI version information as information for determining whether subsequently received PSI/SI version information is modified PSI/SI version information.

As described above, according to the embodiments of the present invention, since PSI/SI is parsed only if update of PSI/SI version information is needed, a working load generated by unnecessarily parsing PSI/SI can be reduced.

In particular, although PSI/SI version information is transmitted through a pilot channel, the present invention is not limited to this. That is, the PSI/SI version information can be transmitted through a specific TS packet data of other channel besides the pilot channel. For example, the TOT, one of the PSI/SI, is used to transmit time, date, and a time offset value when summer time is applied, and since the amount of the TOT is very little, the TOT is transmitted as TS packet data through the EPG channel.

## Table 2

| Portion used by TOT TS packet (area of non 'FF') | | | | | | | | | | | | | | | | | | | Not used area (area of 'FF') | | | | | | | | | | | | | |
|---|---|---|---|---|---|---|---|---|---|---|---|---|---|---|---|---|---|---|---|---|---|---|---|---|---|---|---|---|---|---|---|---|
| 47 | 40 | 14 | 12 | 00 | 73 | 70 | 0B | CF | 91 | 08 | 56 | 51 | F0 | 00 | BC | C6 | 2D | E1 | FF | FF | FF | FF | FF | FF | FF | FF | FF | FF | FF | FF | FF | FF |
| FF | FF | FF | FF | FF | FF | FF | FF | FF | FF | FF | FF | FF | FF | FF | FF | FF | FF | FF | FF | FF | FF | FF | FF | FF | FF | FF | FF | FF | FF | FF | FF | FF |
| FF | FF | FF | FF | FF | FF | FF | FF | FF | FF | FF | FF | FF | FF | FF | FF | FF | FF | FF | FF | FF | FF | FF | FF | FF | FF | FF | FF | FF | FF | FF | FF | FF |
| FF | FF | FF | FF | FF | FF | FF | FF | FF | FF | FF | FF | FF | FF | FF | FF | FF | FF | FF | FF | FF | FF | FF | FF | FF | FF | FF | FF | FF | FF | FF | FF | FF |
| FF | FF | FF | FF | FF | FF | FF | FF | FF | FF | FF | FF | FF | FF | FF | FF | FF | FF | FF | FF | FF | FF | FF | FF | FF | FF | FF | | | | | | |

Table 2 is an illustration obtained by analyzing the TOT TS packet data. In Table 2, each block denotes 1 byte, and 188 bytes, which generally correspond to the amount of single TS packet data, are illustrated. Referring to Table 2, in general, the TOT uses only 19 bytes for a TS header and a TS payload among 188 bytes. Accordingly, the area not used in the TS packet data corresponds to 169 bytes.

Thus, the PSI/SI version information can be transmitted using the TS packet data carrying the TOT. However, in this case, since the TOT TS packet data is transmitted through the EPG channel, the PSI/SI version check unit 512 according to the present invention must be connected to the EPG channel processing unit 504. In this case, the EPG channel processing unit 504 separates PSI/SI version information received through the TOT TS packet data from the EPG channel data and outputs the PSI/SI version information to the PSI/SI version check unit 512. Then, the PSI/SI version check unit 512 reads stored PSI/SI version information, compares a bit stream of the newly received PSI/SI version information to a bit stream of the read PSI/SI version information, and determines whether the PSI/SI version information has been modified according to the comparison result. Since it is determined whether the PSI/SI version information has been modified according to the result of comparing the bit stream of the newly received PSI/SI version information to the bit stream of the read PSI/SI version information, it can be determined whether the PSI/SI version information has been modified without parsing PSI/SI.

In addition, although the PSI/SI version check unit 512 separately exists and the pilot channel processing unit 502 or the EPG channel processing unit 504 extracts the PSI/SI version information and outputs the extracted PSI/SI version information to the PSI/SI version check unit 512 both in a preferred embodiment of the present invention and in the case where the PSI/SI version information is transmitted using the TOT TS packet data, the PSI/SI version check unit 512 may not be a separately unit. That is, the pilot channel processing unit 502 or the EPG channel processing unit 504 may perform the PSI/SI version information check function. In this case, the pilot channel processing unit 502 or the EPG channel processing unit 504 performing the PSI/SI version information check function outputs a parsing signal to each PSI/SI parser.

In addition, although only the SDT, the PAT, and the PMT are used as the PSI/SI, the present invention can be applied to other PSI/SI.

While the invention has been shown and described with reference to a certain preferred embodiment thereof, it will be understood by those skilled in the art that various changes in form and details may be made therein without departing from the scope of the invention.

**Claims**

1.   A digital multimedia broadcasting system for reducing a working load of a digital multimedia broadcasting receiving terminal, the digital multimedia broadcasting system comprising:

a digital multimedia broadcasting station for, when program specific information/service information, PSI/SI, is generated, receiving version information of the PSI/SI from each of PSI/SI generators generating the PSI/SI, generating PSI/SI version information, and transmitting the generated PSI/SI version information through one of pre-set channels; and
the digital multimedia broadcasting receiving terminal for receiving the PSI/SI version information, comparing the received PSI/SI version information to stored PSI/SI version information, and parsing received PSI/SI according to the comparison result.

2.   The digital multimedia broadcasting system of claim 1, wherein the digital multimedia broadcasting station comprises:

PSI/SI generators for generating the PSI/SI; and
a PSI/SI version information input unit for receiving version information of the PSI/SI from the PSI/SI generators, generating PSI/SI version information containing the received version information, and inserting the generated PSI/SI version information into the one of pre-set channels, which is set for carrying the PSI/SI version information.

**3.** The digital multimedia broadcasting system of claim 2, wherein the PSI/SI version information input unit generates single PSI/SI version information containing all of the version information of the PSI/SI.

**4.** The digital multimedia broadcasting system of claim 3, wherein the PSI/SI version information input unit generates PSI/SI version information having a data structure as described below:

| Version IDs and version information of PSI/SI except PMT | | | | | PMT version information of n channels | | | |
|---|---|---|---|---|---|---|---|---|
| 1st PSI/SI ID | 1st PSI/SI version | 2nd PSI/SI ID | 2nd PSI/SI version | ... | PMT ID | 1st ch. PMT version | ... | nth ch. PMT version |

**5.** The digital multimedia broadcasting system of one of claims 1 to 4, wherein the digital multimedia broadcasting station transmits the PSI/SI version information through a pilot channel by inserting the PSI/SI version information into any one frame in which code division multiplex channel configuration information is not included among a plurality of frames constituting data transmitted through the pilot channel, and
wherein the digital multimedia broadcasting receiving terminal extracts the PSI/SI version information from the data received through the pilot channel.

**6.** The digital multimedia broadcasting system of one of claims 1 to 5, wherein the digital multimedia broadcasting station transmits the PSI/SI version information through an electronic program guide channel by inserting the PSI/SI version information into a time offset table transport stream packet data transmitted through the electronic program guide channel, and
wherein the digital multimedia broadcasting receiving terminal extracts the PSI/SI version information from the time offset table transport stream packet data.

**7.** The digital multimedia broadcasting system of one of claims 1 to 6, wherein the digital multimedia broadcasting receiving terminal comprises:

PSI/SI parsers for parsing received PSI/SI;
a PSI/SI version information storage unit for storing PSI/SI version information;
a PSI/SI version check unit for checking whether PSI/SI version information has been modified by comparing the PSI/SI version information received through the one of the pre-set channels to the stored PSI/SI version information and outputting a parsing signal according to the check result; and
a controller for controlling the PSI/SI parsers to parse the received PSI/SI when the parsing signal is output and controlling the PSI/SI version information storage unit to store version information of the parsed PSI/SI when the received PSI/SI is parsed.

**8.** A method for transmitting program specific information/service information, PSI/SI, version information in a digital multimedia broadcasting system including a digital multimedia broadcasting station having a PSI/SI version information input unit for generating PSI/SI version information containing version information of PSI/SI generated by PSI/SI generators, the method comprising the steps of:

generating, by the digital multimedia broadcasting station, PSI/SI version information containing all of version information of PSI/SI generated by each of the PSI/SI generators;
inserting the generated PSI/SI version information into one of transmission channels; and
transmitting the PSI/SI version information through the one of transmission channels.

**9.** The method of claim 8, wherein the one of transmission channels is a pilot channel for carrying code division multiplex channel configuration information.

**10.** The method of claim 9, wherein transmitting the PSI/SI version information comprises:

inserting, by the digital multimedia broadcasting station, the PSI/SI version information into any one unused frame among data frames transmitted through the pilot channel; and
transmitting the data frame containing the PSI/SI version information through the pilot channel.

**11.** The method of one of claims 8 to 10, wherein the one of transmission channels is an electronic program guide channel

**12.** The method of claim 11, wherein transmitting the PSI/SI version information comprises:

inserting, by the digital multimedia broadcasting station, the PSI/SI version information into a time offset table transport stream packet data used for transmitting time information among transport stream packet data transmitted through the electronic program guide channel; and
transmitting the time offset table transport stream packet data containing the PSI/SI version information through the electronic program guide channel.

**13.** A method of parsing program specific information/service information, PSI/SI, in a digital multimedia broadcasting system including a digital multimedia broadcasting receiving terminal having a PSI/SI version check unit for receiving PSI/SI version information and determining whether the PSI/SI version information has been modified, the method comprising the steps of:

receiving, by the digital multimedia broadcasting receiving terminal, the PSI/SI version information;
checking whether stored PSI/SI version information exists;
if the stored PSI/SI version information exists, determining whether PSI/SI version information has been modified by comparing the received PSI/SI version information to the stored PSI/SI version information; and
if the PSI/SI has been modified, parsing the received PSI/SI.

**14.** The method of claim 13, wherein the step of determining whether the PSI/SI version information had been modified comprises comparing a bit stream of the received PSI/SI version information to a bit stream of the stored PSI/SI version information.

**15.** The method of claim 13 or 14, further comprising when the digital multimedia broadcasting receiving terminal parses the PSI/SI, storing PSI/SI version information corresponding to the parsed PSI/SI.

FIG.1

100 — VIDEO/AUDIO DATA GENERATOR
102 — PMT GENERATOR
112 — MEDIA CHANNEL OUTPUT UNIT → MEDIA CHANNEL DATA

104 — SUBSCRIBER AUTHENTICATION INFORMATION GENERATOR
106 — PAT GENERATOR
114 — CAS CHANNEL OUTPUT UNIT → CAS CHANNEL DATA

108 — SDT GENERATOR
116 — EPG CHANNEL OUTPUT UNIT → EPG CHANNEL DATA

110 — CDM CHANNEL CONFIGURATION IMFORMATION GENERATOR
118 — PILOT CHANNEL OUTPUT UNIT → PILOT CHANNEL DATA

120 — MULTIPLEXER → DMB DATA

FIG.2

FIG.3

408
RF UNIT

410
DMB DATA RECEIVING UNIT

406
DISPLAY UNIT

400
CONTROLLER

VIDEO CODEC ~412

AUDIO CODEC ~414

402
MEMORY UNIT

416
PSI/SI VERSION INFORMATION STORAGE UNIT

418
AMPLIFIER

404
KEY INPUT UNIT

FIG.4

FIG.5

EP 1 746 749 A2

START

RECEIVE PILOT CHANNEL DATA
THROUGH PILOT CHANNEL ~600

601

STORED PSI/SI VERSION
INFORMATION EXISTS?

NO

YES

EXTRACT PSI/SI VERSION INFORMATION ~602

READ STORED PSI/SI VERSION
INFORMATION ~604

606

HAS PSI/SI VERSION
INFORMATION BEEN MODIFIED?

NO

YES

PARSE PSI/SI ~608

STORE VERSION INFORMATION
OF PARSED PSI/SI ~610

END

FIG.6